Europäisches Patentamt

(19) European Patent Office

Office européen des brevets

(11) Veröffentlichungsnummer: **0 017 605**
**B1**

(12) **EUROPÄISCHE PATENTSCHRIFT**

(45) Veröffentlichungstag der Patentschrift:
23.06.82

(51) Int. Cl.³: **E 04 B 5/48,** F 24 D 19/00

(21) Anmeldenummer: **80710006.0**

(22) Anmeldetag: 07.03.80

(54) **Bauelementensatz für Fussbodenhelzungen.**

(30) Priorität: **28.03.79 DE 2912251**

(43) Veröffentlichungstag der Anmeldung:
**15.10.80 Patentblatt 80/21**

(45) Bekanntmachung des Hinweises auf die Patenterteilung:
**23.06.82 Patentblatt 82/25**

(84) Benannte Vertragsstaaten:
**AT BE CH FR GB IT LU NL SE**

(56) Entgegenhaltungen:
**DE-A1-2 733 361**
**DE-U-7 709 396**
**DE-U1-7 827 229**
**FR-A7-2 336 049**

(73) Patentinhaber: **Burwinkel Kunststoffwerk GmbH,
D-2843 Dinklage (DE)**

(72) Erfinder: **Burwinkel, Franz, D-2842 Südlohne (DE)**

(74) Vertreter: **Jabbusch, Wolfgang, Dr., Elisabethstrasse 6,
D-2900 Oldenburg (DE)**

Bauelementensatz für Fußbodenheizungen

Die Erfindung betrifft einen Bauelementensatz für Fußbodenheizungen, bei denen Rohrleitungsschlangen mit Schellen in einem Abstand zum Fußboden gehalten sind, der mit einer Isolierschicht und Aluminiumblechplatten bedeckt ist.

Durch das deutsche Gebrauchsmuster 7 709 396 ist ein Bauelementensatz bekanntgeworden, der aus mehreren verlegbaren Montageplatten besteht und Rohrschellen aufweist, mit denen die Rohre an den Montageplatten befestigt werden, indem die Rohrschellen mit an ihren Enden angeformten Haltedübeln in Befestigungslöcher der Montageplatten eingreifen. Die Montageplatten bestehen aus einer Isolierplatte, aus beispielsweise geschäumten Kunststoff, auf die eine dünne Aluminiumplatte geklebt ist.

Die bekannten Montageplatten haben den Nachteil, daß ihr Schichtaufbau durch die feste Verbindung der einzelnen Platten nicht mehr verändert werden kann. Das verhältnismäßig große Volumen der Isolierplatten wirkt sich außerdem nachteilig auf Transport und Lagerung der Einzelteile für eine Fußbodenheizung aus. Die verhältnismäßig dicke Isolierschicht der Montageplatten erzeugt eine unzweckmäßige Stapelhöhe bei nur wenigen aufeinander gelegten Montageplatten und erfordert auch einen verhältnismäßig hohen Aufwand an Verpackungsmaterial.

Für die Befestigung der Rohrhalteschellen sind die bekannten Montageplatten mit einem Lochbild versehen, dessen Fertigung sich auf die Herstellungskosten ungünstig auswirkt.

Der Erfindung liegt die Aufgabe zugrunde, einen Bauelementensatz der vorbezeichneten Art bezüglich der Verwendungsmöglichkeiten zu verbessern und gleichzeitig die Herstellungskosten zu senken.

Diese Aufgabe ist nach der Erfindung gelöst worden durch auf der Isolierschicht nachträglich verlegbare Aluminiumblechplatten, durch an der Rückseite jeder Aluminiumplatte anbringbare Abschnitte von Doppelklebebandstreifen durch zwischen den Kanten einander benachbarter Aluminiumplatten wirkende Abstandshalter und durch Schellen mit einem Haltefuß, der in den Abstandsspalt zwischen einander benachbarten verlegten Aluminiumplatten einsetzbar ist.

Bei dem erfindungsgemäßen Bauelementensatz sind die Isolierplatte und die darauf verlegbare Aluminiumplatte von einander getrennte Einzelteile, so daß von einem die Fußbodenheizungen einbauenden Installationsbetrieb lediglich noch die dünnen Aluminiumplatten in kostengünstiger Weise gelagert zu werden brauchen. Die Styroporplatten für die Isolierschicht können von einem entsprechenden Herstellungsbetrieb direkt an die Baustelle geliefert werden. Die Trennung der Isolierplatten von den Aluminiumplatten hat bei dem erfindungsgemäßen Bausatz auch noch den Vorteil, daß die Schichtdicke der Isolierplatten frei gewählt werden kann und den jeweiligen Erfordernissen auf der Baustelle anpaßbar ist, wobei vom einbauenden Installationsbetrieb für alle Schichtdicken der Isolationsplatten die gleichen Aluminiumplatten verwendet werden können. Lagerhaltung und Transport der Einzelteile für die Fußbodenheizung verringern sich dadurch in vorteilhafter Weise.

Die Befestigung der Aluminiumplatten auf den Isolierplatten erfolgt durch unter die Aluminiumplatten geklebte Streifenabschnitte von für die Teppichbodenverlegung bereits bekannten Doppelklebeband. Die Aluminiumplatten haben vorzugsweise eine den an sich bekannten Teppichfliesen entsprechende Dimensionierung, so daß sie in gleicher Weise einfach verlegt werden können, indem vom Doppelklebeband die Schutzschicht abgezogen wird und nach dem Auflegen auf die Isolierplatten die entsprechende feste Verbindung gegeben ist. Auf der Baustelle lassen sich die dünnen Aluminiumplatten auch leicht durch entsprechende Zuschnitte den Anforderungen der Verlegung anpassen. Da die Isolierschicht in verhältnismäßig großen Platten verlegt werden kann, ist deren Einbringung ebenfalls sehr einfach.

Zum Bauelementensatz gehören ebenfalls Abstandshalter, welche eine Fuge zwischen zwei benachbarten Aluminiumplatten in einem solchen Abstand halten, daß eine die Rohrleitungen haltende Schelle eingesteckt werden kann. Die Herstellung der Aluminiumplatten ist dadurch vereinfacht, da ein Anbringen von Löchern in vorbestimmtem Rastermaß, beispielsweise eines Lochbildes, entfällt. Die Aluminiumplatten werden lediglich auf vorbestimmte Rastermaße zugeschnitten.

Die Schellen und die Abstandshalter können auf kostengünstige Weise als sogenannte Massenartikel im Spritzgußverfahren aus Kunststoff hergestellt werden.

Bei einer bevorzugten Ausführung ist vorgesehen, daß jeder Abstandshalter ein den Spalt zwischen zwei benachbarten Aluminiumplatten überbrückendes Stegteil ist, an desen Unterseite ein in den Abstandsspalt eintauchendes Distanzelement angeordnet ist, und daß am Stegteil mit der Aluminiumplatte in Wirkverbindung bringbare Verbindungselemente angeordnet sind.

Diese Verbindungselemente sind als in Durchbrüche der Aluminiumplatte eindrückbare Rastelemente ausgebildet. Als Rastelemente sind z. B. von der Unterseite des Stegteils abstehende Spreizdorne besonders geeignet, die sich nach dem Durchstecken aufspreizen und eine sichere Befestigung gewährleisten.

Bei dem erfindungsgemäßen Bauelementensatz wird die Schelle für die Halterung der Rohre in den Abstandsspalt zwischen zwei einander benachbarten, auf den Isolierplatten verlegten Aluminiumplatten befestigt, so daß zur Positionierung der einzelnen Halteschellen die gesamte Länge eines solchen Spalts zur Verfügung steht. Die Rohrschelle kann dadurch an beliebiger Stelle zur Halterung eines Rohres angebracht werden.

Die besondere Ausbildung der Schelle mit einem Haltefuß hat dabei den Vorteil, daß die Schelle auch nach ihrer Einbringung in den Abstandsspalt zwischen zwei Aluminiumplatten noch gedreht werden kann, so daß auch die Stellung der Rohrschelle beliebig gewählt werden kann. Bei einem bevorzugten Ausführungsbeispiel ist vorgesehen, daß der Haltefuß als von der Schelle unten abstehender, in den Abstandsspalt einsetzbarer Stift ausgebildet ist, der zwei bei eingesetztem Stift die Aluminiumplatten zwischen sich einschließende, radial abstehende Fußteller aufweist, und daß der die Aluminiumplatten untergreifende erste Fußteller mindestens einen von der freien Fußtellerunterseite zu der dem zweiten, die Aluminiumplatten übergreifenden Fußteller zugekehrten Oberseite schräg verlaufenden Radialschlitz aufweist. Dieser Radialschlitz erlaubt eine einfache Befestigungsmöglichkeit des die Schelle tragenden Haltefußes im Abstandsspalt, indem die Schelle schraubenähnlich eingedreht wird und dabei die Blechkanten von der Unterseite des unteren Fußtellers durch den Radialschlitz aufwärts in den Raum zwischen den beiden Fußtellern eingeführt werden. Die Halteschelle ist danach nicht mehr aus dem Abstandsspalt herausziehbar. Sie ist lediglich noch um die Längsachse des Stiftes drehbar, welcher den Abstandsspalt durchdringt.

Der zweite, die Aluminiumplatte übergreifende Fußteller weist bei einer bevorzugten Ausführung an seiner dem ersten Fußteller zugekehrten Unterseite eine entlang einer seiner geometrischen Mittelachsen geführte Rille auf. Der von der Unterseite der Schelle abstehende Stift ist in vorteilhafter Weise etwas stärker dimensioniert als die Weite des Abstandsspalts zwischen den Aluminiumplatten, so daß deren den Abstandsspalt begrenzende Kanten nach Eindrehen der Schelle auseinandergedrückt werden und hochbiegen. Damit die die Aluminiumplatten zwischen sich einschließenden Fußteller nicht auseinandergedrückt werden, sondern satt an den Aluminiumplatten anliegen, um Kippen und Wackeln zu unterbinden, können diese hochgebogenen Kanten im Verformungsbereich in die Rille ausweichen. Die Verformung der Kanten durch den Stift hat außerdem noch den wesentlichen Vorteil, daß die eingebrachte Schelle nicht mehr ohne weiteres in Längsrichtung des Abstandsspalts zwischen zwei Aluminumplatten verschiebbar ist und somit die Schelle eine verhältnismäßig starre Befestigungsmöglichkeit für das Rohr bietet.

Ein Ausführungsbeispiel der Erfindung ist in der Zeichnung dargestellt. Es zeigt

Fig. 1 eine Draufsicht auf zwei verlegte Aluminiumplatten mit eingesetzter Schelle und davon gehaltenem Rohr,

Fig. 2 einen schematischen Schnitt durch die verlegten Platten entlang der Linie II-II in Fig. 1,

Fig. 3 einen schematischen Schnitt entlang der Linie III-III in Fig. 1,

Fig. 4 eine Seitenansicht des Abstandshalters gemäß Fig. 1 und 2 in vergrößertem Maßstab,

Fig. 5 eine Seitenansicht der Schelle mit Haltefuß und

Fig. 6 die Schelle gemäß Fig. 5 um 90° gedreht.

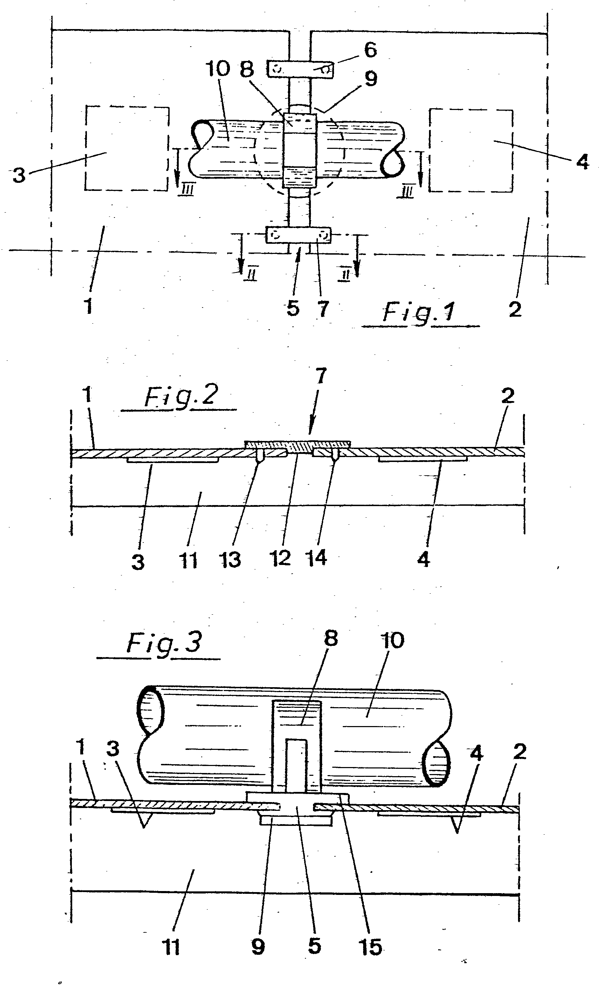

In Fig. 1 sind zwei zueinander benachbart verlegte Aluminiumplatten 1 und 2 in der Draufsicht schematisch dargestellt. Jede Aluminiumplatte ist an der Unterseite mit einem durch gestrichelte Linien dargestellten Streifenabschnitt 3, 4 eines Doppelklebebandes versehen, mit dem die Aluminiumplatten auf einer Isolierplatte befestigt werden. Zwischen den verlegten Aluminiumplatten 1 und 2 verbleibt ein freier Abstandsspalt 5, dessen Weite durch den Spalt überbrückende Abstandshalter 6 und 7 festgelegt ist. In den Spalt ist die Schelle 8 einsetzbar und wird mit den durch gestrichelte Linien dargestellten, die einander benachbarten Aluminiumbleche 1, 2 zwischen sich abschließenden Fußtellern 9, 15 gehalten. Mit 10 ist ein von der Schelle 8 getragenes Rohr einer Heizungsanlage bezeichnet.

In Fig. 2 ist ein schematischer Schnitt entlang der Linie II-II in Fig. 1 dargestellt. Die verlegten Aluminiumplatten 1 und 2 sind mittels der Streifenabschnitte 3, 4 auf einer Isolierplatte 11, beispielsweise aus Styropor, befestigt. Der Abstandshalter 7 greift mit einem an seiner Unterseite angeordneten Distanzelement 12 in den Abstandsspalt zwischen den beiden Aluminiumplatten 1 und 2 ein und der Abstandshalter ist mit an seiner Unterseite angeordneten, vorstehenden Spreizdornen 13, 14 in entsprechenden Durchbrüchen in den Randbereichen der Aluminiumplatten 1 und 2 verankert.

In Fig. 3 ist eine schematische Schnittansicht entlang der Linie III-III in Fig. 1 dargestellt. Gleiche Bauteile sind mit gleichen Bezugszahlen versehen. Diese Darstellung läßt erkennen, wie die das Heizungsrohr 10 tragende Schelle 8 mit die Aluminiumplatten 1 und 2 zwischen sich einschließenden Fußtellern 9 und 15 im Abstandsspalt 5 zwischen den beiden auf der Isolierplatte 11 verlegten Aluminiumplatten 1 und 2 verankert ist.

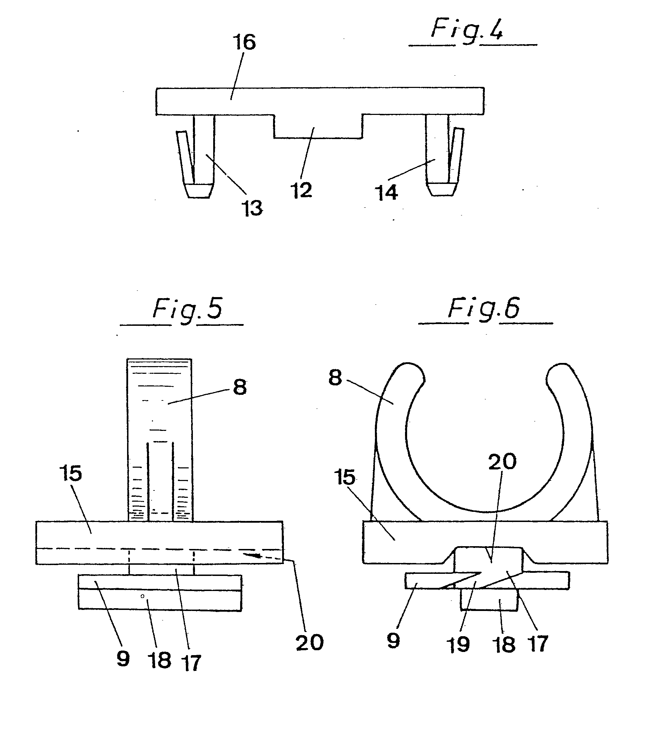

In Fig. 4 ist einer der Abstandshalter 6, 7 in der Seitenansicht in vergrößertem Maßstab dargestellt. Der Abstandshalter ist ein den Abstandsspalt überbrückender Steg 16 aus Kunststoff, an dessen Unterseite eine vorstehende Rippe als Distanzelement 12 angeordnet ist. Mit 13 und 14 sind die Spreizdübel bezeichnet, die in Durchbrüche der verlegten Aluminiumplatte 1 und 2 eindrückbar sind und den Abstandshalter verankern. Das Distanzelement 12 taucht dabei in den Abstandsspalt zwischen zwei Aluminiumplatten ein und hält ihn auf vorbestimmter Weite.

In Fig. 5 ist eine Schelle 8 zur Halterung eines Heizungsrohres dargestellt. An der Unterseite der Schelle ist ein lotrecht vorstehender, in den Abstandsspalt eintauchender Stift 17 angeordnet, der zwei radial abstehende kreisförmige Fußteller 9 und 15 aufweist, von denen der obere Fußteller 15 auf den Aluminiumplatten zu liegen kommt und der untere Fußteller 9 die Aluminiumplatten beiderseits des Abstandsspalts untergreift. Der untere Fußteller 9 ist mit einer vorstehenden Rippe 18 versehen, die in den Abstandsspalt eingreifen kann und die das Ansetzen und Einbringen der Schelle in den Abstandsspalt erleichtert.

In Fig. 6 ist die Schelle gemäß Fig. 5 um 90° gedreht dargestellt. Der untere Fußteller ist mit einem radial von außen bis zum Stift 17 schräg verlaufenden Radialschlitz 19 versehen, durch den die jeweilige Kante einer der an der Bildung des Abstandsspalts beteiligten Aluminiumplatten bei Drehung der mit der Rippe 18 in den Abstandsspalt gesetzten Schelle zwischen die beiden Fußteller 9 und 15 geführt wird. Die Rippe 18 ist in der Breite der Weite des Abstandsspalts zwischen den Aluminiumplatten angepaßt. Der Stift 17 ist etwas stärker dimensioniert, so daß der Abstandsspalt bei Eindringen der Aluminiumplatten über den Radialschlitz 19 in den Raum zwischen den beiden Fußtellern 9 und 15 auseinandergedrückt werden. Durch die Abstandshalter 6 und 7 wird eine Weitenveränderung des Abstandsspalts jedoch verhindert, so daß die Kanten des Abstandsspalts zwischen den Aluminiumplatten gestaucht beziehungsweise verformt werden. Zur Aufnahme dieser Verformung weist der obere Fußteller 15 die radial verlaufende Rille 20 auf.

Es sei noch hervorgehoben, daß der Fußteller 9 beiderseits des Stifts einen Radialschlitz 19 aufweist, dessen Steigungsrichtung zum dargestellten Radialschlitz entgegengesetzt angeordnet ist, so daß durch jeden Radialschlitz eine der den Abstandsspalt begrenzenden Kanten der Aluminiumplatten 1 und 2 geführt wird.

## Patentansprüche

1. Bauelementensatz für Fußbodenheizungen, bei denen Rohrleitungsschlangen mit Schellen (8) in einem Abstand zum Fußboden gehalten sind, der mit einer Isolierschicht (11) und Aluminiumblechplatten (1, 2) bedeckt ist, gekennzeichnet durch
auf der Isolierschicht (11) nachträglich verlegbare Aluminiumblechplatten (1, 2),
durch an der Rückseite jeder Aluminiumplatte (1, 2) anbringbare Streifenabschnitte (3, 4) von Doppelklebeband,
durch zwischen den Kanten einander benachbarter Aluminiumplatten (1, 2) wirkende Abstandshalter (6, 7) und
durch Schellen (8) mit einem Haltefuß, der in den Abstandsspalt (5) zwischen einander benachbarten verlegten Aluminiumplatten (1, 2) einsetzbar ist.

2. Bauelementensatz nach Anspruch 1, dadurch gekennzeichnet, daß jeder Abstandshalter (6, 7) ein den Abstandsspalt (5) zwischen zwei benachbarten Aluminiumplatten (1, 2) überbrückendes Stegteil (16) ist, an dessen Unterseite ein in den Spalt eintauchendes Distanzelement (12) angeordnet ist und daß am Stegteil mit den Aluminiumplatten in Wirkverbindung bringbare Verbindungselemente angeordnet sind.

3. Bauelementensatz nach Anspruch 2, dadurch gekennzeichnet, daß die Verbindungselemente als in Durchbrüche der Aluminiumplatten (1, 2) eindrückbare Rastelemente ausgebildet sind.

4. Bauelementensatz nach Anspruch 3, dadurch gekennzeichnet, daß jedes Rastelement als von der Unterseite des Stegteils (16) abstehender Spreizdorn (13, 14) ausgebildet ist.

5. Bauelementsatz nach einem der vorhergehenden Ansprüche, dadurch gekennzeichnet, daß der Werkstoff für den Abstandshalter (6, 7) Kunststoff ist.

6. Bauelementensatz nach Anspruch 1, dadurch gekennzeichnet, daß der Haltefuß der Schellen (8) als von der Schelle (8) unten abstehender, in den Abstandsspalt (5) einsetzbarer Stift (17) ausgebildet ist, der zwei bei eingesetztem Stift die Aluminiumplatten (1, 2) zwischen sich einschließende, radial abstehende Fußteller (9, 15) aufweist und daß der Aluminiumplatten untergreifende untere Fußteller (9) mindestens einen von der freien Fußtellerunterseite zu der dem oberen, die Aluminiumplatten übergreifenden Fußteller (15) zugekehrten Oberseite schräg verlaufenden Radialschlitz (19) aufweist.

7. Bauelementensatz nach Anspruch 6, dadurch gekennzeichnet, daß der obere, die Aluminiumplatten übergreifende Fußteller (15) an seiner dem unteren Fußteller (9) zugekehrten Unterseite eine entlang einer der geometrischen Fußteller-Mittelachsen geführte Rille (20) aufweist.

8. Bauelementensatz nach einem der vorhergehenden Ansprüche, dadurch gekennzeichnet, daß der Werkstoff für die Schelle (8) mit Haltefuß Kunststoff ist.

## Claims

1. A set of construction units for floor heating installations, in which pipe coils are held at a distance from the floor by clamps (8), the floor being covered with an insulating layer (11) and aluminium sheet plates (1, 2), characterised by strip sections (3, 4) of double adhesive tape which can subsequently be applied to the back of each aluminium plate (1, 2), by spacers (6, 7) which act between the edges of adjacent aluminium plates (1, 2) and by clamps (8) with a holding base which can be inserted in the gap (5) between adjacent aluminium plates (1, 2).

2. A set of construction units according to claim 1, characterised in that each spacer (6, 7) is a cross piece (16) which bridges the gap (5) between two adjacent aluminium plates (1, 2) and on whose underside a distance element (12), which is inserted in the gap, is arranged and that connecting elements, which can be operatively connected to the aluminium plates, are arranged on the cross piece.

3. A set of construction units according to claim 2, characterised in that the connecting elements are formed as locking elements which can be pushed into openings in the aluminium plates (1, 2).

4. A set of construction units according to claim 3, characterised in that each locking element is formed as an expanding mandrel (13, 14) projecting from the underside of the cross piece (16).

5. A set of construction units according to one of the preceding claims, caracterised in that the material used for the spacer (6, 7) is a plastics material.

6. A set of construction units according to claim 1, characterised in that the holding base of the clamps (8) is formed as a pin (17) which projects downwards from the clamp (8), can be inserted in the gap (5) and is provided with two radially projecting base plates (9, 15) which sandwich the aluminium plates (1, 2) when the pin is inserted and in that lower base plate (9), which engages under the aluminium plates, is provided with at least one radial slot (19) which extends obliquely from the free base plate unserside to the upper side facing the upper base plate (15) engaging over the aluminium plates.

7. A set of construction units according to claim 6, characterised in that the upper base plate (15), which engages over the aluminium plates, is provided on its underside which faces the lower base plate (9) with a groove (20) extending along one of the geometrical base plate central axes.

8. A set of construction units according to one of the preceding claims, characterised in that the material used for the clamp (8) with a holding base is a plastics material.

**Revendications**

1. Jeu d'éléments de construction pour des chauffages par le sol, dans lesquels des serpentins de conduites sont maintenus à une certaine distance du plancher par des colliers (8), ce plancher étant recouvert d'une couche isolante (11) et de plaques en tôle d'aluminium (1, 2), caractérise par des plaques en tôle d'aluminium pouvant être disposées ultérieurement sur la couche isolante (11), par des morceaux (3, 4) d'une bande à double collage applicables sur la face dorsale de chaque plaque d'aluminium (1, 2), par des entretoises d'écartement (6, 7) agissant entre les bords de plaques d'aluminium (1, 2) voisines l'une de l'autre, et par des colliers (8) avec un socle de maintien qui peut s'engager dans l'intervalle (5) entre des plaques d'aluminium (1, 2) posées au voisinage l'une de l'autre.

2. Jeu d'éléments de construction selon la revendication 1, caractérisé en ce que chaque entretoise d'écartement (6, 7) est une barrette (16) formant pont sur l'intervalle d'écartement (5) entre deux plaques d'aluminium voisines (1, 2), la face inférieure de cette barrette portant un élément d'écartement (12) qui s'encastre dans l'intervalle et que sur la barrette sont disposés des éléments de jonction destinés à coopérer avec les plaques d'aluminium.

3. Jeu d'éléments de construction selon la revendication 2, caractérisé en ce que les éléments de jonction sont constitués comme des éléments à enclenchement pouvant s'enficher dans des trous des plaques d'aluminium (1, 2).

4. Jeu d'éléments de construction selon la revendication 3, caractérisé en ce que chaque élément d'enclenchement est constitué sous la forme d'une goupille extensible (13, 14) partant de la face inférieure de la barrette (16).

5. Jeu d'éléments de construction selon l'une quelconque des revendications précédentes, caractérisé en ce que le matériau pour l'entretoise d'écartement (6, 7) est une matière plastique.

6. Jeu d'éléments de construction selon la revendication 1, caractérisé en ce que le socle de retenue des colliers (8) est constitué sous la forme d'une cheville (17) descendant à partir du collier (8) et pouvant s'encastrer dans l'intervalle d'écartement (5), cette cheville (17) présentant deux plateaux de socle (9, 15) s'étendant radialement en renferment entre eux les plaques d'aluminium et en ce que le plateau inférieur (9) en contact sous les plaques d'aluminium présente au moins une fente radiale inclinée (19) s'étendant obliquement de la face inférieure libre du plateau jusqu'à la face supérieure en regard du plateau supérieur (15) recouvrant les plaques d'aluminium.

7. Jeu d'éléments de construction selon la revendication 6, caractérisé en ce que le plateau de socle supérieur (15) recouvrant les plaques d'aluminium présente, sur sa face inférieure en regard du plateau de socle inférieur (9), une rainure (20) établie suivant un diamètre du plateau de socle.

8. Jeu d'éléments de construction selon l'une quelconque des revendications précédentes, caractérisé par le fait que le matériau pour le collier (8) avec socle de retenue est une matière plastique.

Fig.1

Fig.2

Fig.3

_Fig.4_

16

13   12   14

_Fig.5_          _Fig.6_

8

8

15          15          20

20

9  18  17          9  19  18  17